# EUROPEAN PATENT APPLICATION

(11) **EP 1 473 922 A2**
(43) Date of publication of application: **03.11.2004**
(21) Application number: 03024391.9
(22) Date of filing: 24.10.2003
(51) Int. Cl.: H04N 1/32

(54) **Facsimile transmission with instruction sub-code**

(30) Priority: 29.04.2003 US 425345
(71) Applicant: Hewlett-Packard Development Company, L.P., Houston, TX 77070 (US)
(72) Inventor: Cariffe, Alan Eddy, San Diego,CA 92131-2286 (US)
(74) Representative: Schoppe, Fritz, Dipl.-Ing.

(57) **Abstract**

In an implementation of facsimile transmission with instruction sub-code, a sending device (102) contacts a receiving device (104) to initiate a fax session with the receiving device (104) and communicates an instruction sub-code (124) to the receiving device (104) before a fax protocol exchange is initiated. Fax protocol exchange information (128) is then received from the receiving device (104) and, in response, the sending device (102) communicates fax protocol exchange information (130) and communicates a facsimile transmission that includes fax data (110) to the receiving device (104).

## Description

### TECHNICAL FIELD

This invention relates to facsimile enabled devices and, in particular, to facsimile transmission with instruction sub-code.

### BACKGROUND

A facsimile (or "fax") is a communication of digital fax data from a sending facsimile device to a receiving facsimile device. To establish a fax session via a Public Switched Telephone Network (PSTN) connection between two fax machines, the sending device calls a fax-telephone number corresponding to the receiving device. The two devices then exchange setup information as signal tones communicated via a modem (or modulator-modulator) in each device that connects the device with the PSTN. The setup information is exchanged, or otherwise negotiated, to establish connection speeds and protocols of the communication link. The sending device then transmits the fax data to the receiving device via each devices modem and the PSTN connection. Additionally, the devices typically exchange status and confirmation information when the setup information is exchanged and/or when the fax data is transmitted to the receiving device.

A fax server is a communication device that is typically implemented with both software and hardware to receive incoming facsimile transmissions from a sending device and redirect, or route, the facsimile transmissions to one or more designated receiving devices, such as other fax machines or network connected computers. A fax server can receive a destination address as a code or codes that designate where to route a received facsimile transmission. The destination codes are encoded within a digitally transmitted fax header that is transmitted as part of the facsimile transmission of the fax data, or that is transmitted as part of the setup information exchanged to establish the communication link. A fax server, however, is generally expensive to implement and maintain, requiring attendant overhead and several telephone lines or network connections over which the facsimile transmissions are received and transmitted.

Accordingly, there is a need to provide a cost-effective and easy to implement user-friendly system in which facsimile transmissions can be redirected without costly fax server systems.

### SUMMARY

Facsimile transmission with instruction sub-code is described herein.

In an implementation, a sending device contacts a receiving device to initiate a fax session with the receiving device and communicates an instruction sub-code to the receiving device before a fax protocol exchange is initiated. Fax protocol exchange information is then received from the receiving device and, in response, the sending device communicates fax protocol exchange information and communicates a facsimile transmission that includes fax data to the receiving device.

### BRIEF DESCRIPTION OF THE DRAWINGS

The same numbers are used throughout the drawings to reference like features and components:
Fig. 1 illustrates an exemplary facsimile transmission system in which facsimile transmission with instruction sub-code can be implemented.
Fig. 2 illustrates an exemplary facsimile transmission network system in which facsimile transmission with instruction sub-code can be implemented.
Fig. 3 is a flow diagram that illustrates an exemplary method for facsimile transmission with instruction sub-code.
Fig. 4 illustrates various components of an exemplary facsimile enabled device which can be implemented in a facsimile transmission system.
Fig. 5 illustrates various components of an exemplary computing device which can be implemented in a facsimile transmission system.

### DETAILED DESCRIPTION

The following describes facsimile transmission with instruction sub-code. A facsimile enabled sending device can initiate a fax session by calling a facsimile enabled receiving device and, before the receiving device initiates a fax protocol exchange with the sending device, the sending device transmits one or more instruction sub-codes to the receiving device. An instruction sub-code transmitted before the fax protocol exchange information can designate, or be utilized to reference, a destination of the fax data that is communicated as part of the facsimile transmission from the sending device to the receiving device. Additionally, an instruction sub-code can designate, or be utilized to reference, a fax data processing instruction.

The facsimile transmission of instruction sub-codes described herein serves legacy fax devices without modification. That is, legacy fax devices do not need additional hardware and no intervening devices or components need be implemented between a facsimile enabled sending device and a corresponding facsimile enabled receiving device. Further, the instruction sub-code(s) can be encrypted to prevent receiving unwanted faxes and advertising commonly referred to as "spamming" via facsimile devices.

By way of example, a traveling salesperson having only a cellular phone and a simple facsimile enabled device can communicate information with an entire organization utilizing a single instruction sub-code. The salesperson can initiate a fax session to a network connected facsimile enabled receiving device in the person's home office, communicate an instruction sub-code that designates multiple destinations within the organization, and then communicate sales and product order information with the single facsimile transmission. The receiving device can obtain an indexed instruction corresponding to the instruction sub-code which designates that the sales and product order information be redirected to a product shipping department, accounting, and/or any of the salesperson's colleagues and supervisors.

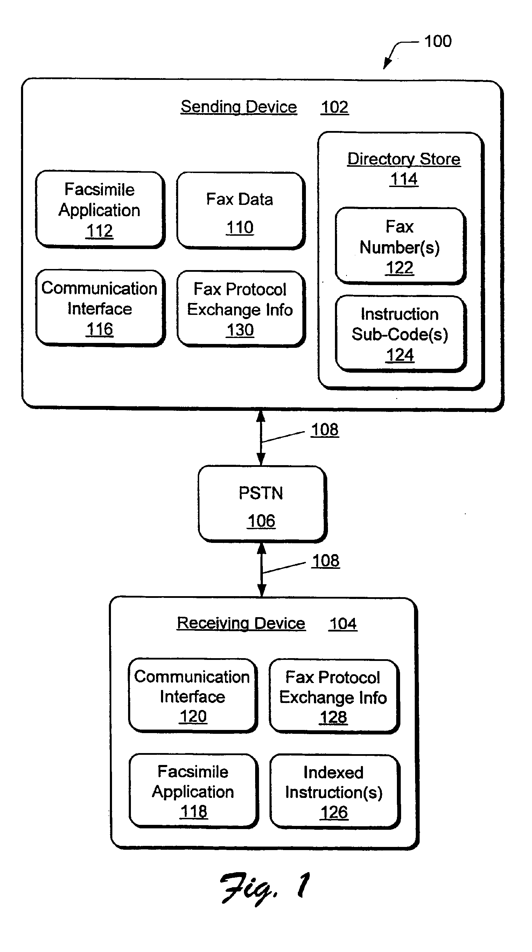

Fig. 1 illustrates an exemplary facsimile transmission system 100 in which facsimile transmission with instruction sub-code can be implemented. System 100 includes a sending device 102, a receiving device 104, and a public switched telephone network 106 (PSTN). Although the facsimile enabled devices 102 and 104 are described as a sending device and a receiving device, respectively, each is a facsimile enabled device that can be implemented to communicate facsimile transmissions as a sending or receiving device. Further, network 106 can be implemented as any type of network using any type of network topology and any network communication protocol. Facsimile transmissions can be communicated via the Internet, a wireless connection, by direct connection via a wired communication system, and/or any combination thereof.

Sending device 102 is communicatively coupled to receiving device 104 via communication lines 108, such as a telephone line for example, through the public switched telephone network 106 or via a network or wireless connection. A facsimile (or "fax") is a digital representation of scanned text and/or an image that can be reproduced as electronic media, such as on a display device, or as a printed image after the digital fax data 110 corresponding to the image has been communicated from sending device 102 to receiving device 104.

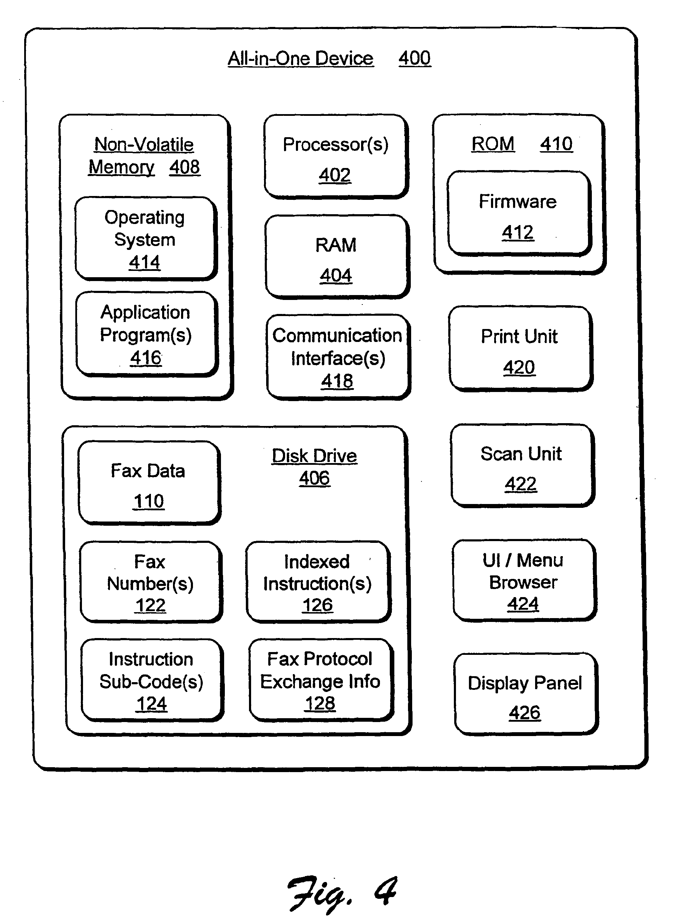

Sending device 102 includes a facsimile application 112, a directory store 114, and a communication interface 116. Similarly, receiving device 104 includes a facsimile application 118 and a communication interface 120. Although not shown in this example, sending device 102 and receiving device 104 can each be implemented with any number and combination of different components, such as one or more processors and memory components as further described below with reference to Fig. 4.

The facsimile applications 112 and 118 can each be implemented as computer-readable instructions maintained with a memory component and executable to perform the facsimile-related operations of the respective facsimile enabled devices. Although the facsimile applications 112 and 118 are each illustrated and described as a single application configured to perform the facsimile-related operations described herein, each application 112 and 118 can be implemented as several component applications distributed to each perform one or more functions in the facsimile enabled devices to implement facsimile transmission with instruction sub-code.

Communication interface 116 in sending device 102, and communication interface 120 in receiving device 104, can each be implemented as any type of wired connection, wireless interface, or network interface that provides a communication connection for facsimile transmissions between sending device 102 and receiving device 104 via the public switched telephone network 106.

A memory component in sending device 102 can be implemented as the directory store 114 to maintain a directory of fax-telephone numbers 122, such as a fax number that corresponds to receiving device 104. The directory store 114 can also be utilized to store instruction sub-codes 124 that designate a destination of fax data 110 that is communicated as part of a facsimile transmission to receiving device 104. Further, an instruction sub-code 124 can be a fax data processing instruction, or can correspond to an indexed instruction 126 maintained by the receiving device 104. An indexed instruction 126 can also designate a destination of received fax data and/or can designate a fax data processing instruction. An instruction sub-code 124 can include any number of other instruction sub-codes as well.

A destination of received fax data can include any other designated receiving device, such as another facsimile enabled device, a computing or appliance device, a network connected computing device, a printing device, and the like. Further, a destination of received fax data can include a file location stored in a memory of the aforementioned receiving devices, an email message or an email attachment to an email message, an Internet universal resource locator (URL), and any other different type of destination. A fax data processing instruction can also include generating an optical character recognition (OCR) text file from the fax data to be merged into a document, specifying a future time to deliver the received fax data, and any other type of processing and/or handling instruction.

Sending device 102 can initiate a fax session by calling a fax-telephone number 122 corresponding to receiving device 104 which is transmitted as dual tone multi-frequency (DTMF) tones (e.g., touchtone dialing that generates a high frequency tone and a lower frequency tone for each digit of a dialed telephone and/or fax number). When receiving the call to initiate the fax session, receiving device 104 pauses before responding to sending device 102 with fax protocol exchange information 128 to establish the communication link, negotiate a common transmission speed, and the like. The receiving device 104 can pause for a duration of time (e.g., ten seconds, fifteen seconds, or any other optionally configurable duration) during which sending device 102 can communicate one or more instruction sub-codes 124 to the receiving device.

The instruction sub-codes 124 are communicated as one or more additional dual tone multi-frequency tones after the dialed fax number. For example, an instruction sub-code can be appended to the fax-telephone number, can follow the fax-telephone number and a recognizable pause, or can be communicated after a marker tone to indicate that an instruction sub-code is to follow. The instruction sub-code(s) 124 can be stored in the directory store 114 for speed button dialing, or optionally, can be entered manually via a user interface and keypad by a user of sending device 102.

After the pause duration, and whether or not the sending device 102 has communicated an instruction sub-code, the receiving device 104 initiates the fax protocol exchange. When sending device 102 receives the fax protocol exchange information 128 from receiving device 104, the sending device 102 communicates fax protocol exchange information 130 to the receiving device 104 to establish the communication link. Subsequently, sending device 102 communicates a facsimile transmission that includes fax data 110 to receiving device 104.

Receiving device 104 obtains an indexed instruction 126 corresponding to a received instruction sub-code 124 and redirects the received fax data 110 to a designated destination and/or processes the fax data according to a fax data processing instruction (e.g., the indexed instruction 126). The indexed instructions 126 can be maintained in a look-up table, for example, such that facsimile application 118 can be implemented to correlate a received instruction sub-code 124 with the associated indexed instruction 126.

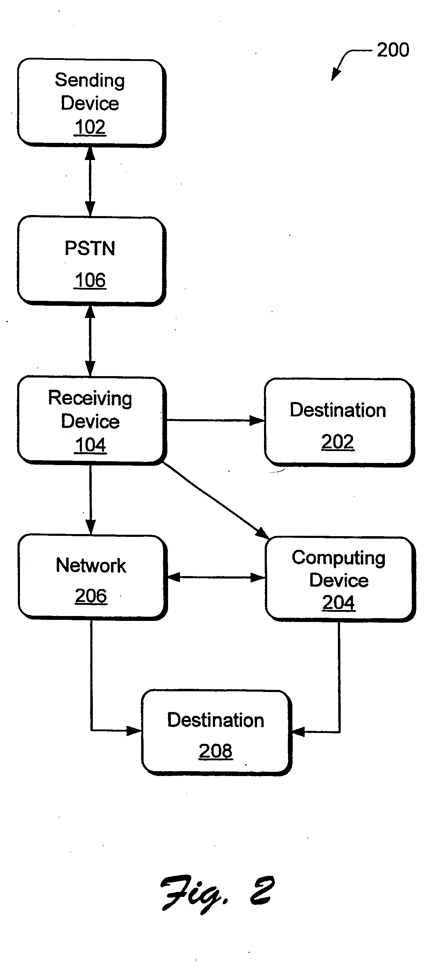

Fig. 2 illustrates an exemplary facsimile transmission network system 200 that includes the facsimile transmission system 100 (Fig. 1) and in which facsimile transmission with instruction sub-code can be implemented. System 200 includes sending device 102, receiving device 104, and the public switched telephone network 106 as described above with reference to Fig. 1.

System 200 also includes a destination 202, a computing device 204, a network 206, and a network-connected destination 208. Destinations 202 and 208, as well as computing device 204, are illustrative examples of designated destinations corresponding to an instruction sub-code, such as another facsimile enabled device, a computing device, a printing device, a file location stored in a memory, an email message or an email attachment to an email message, an Internet universal resource locator (URL), and/or any other different type of destination for fax data that is received as part of a facsimile transmission.

Receiving device 104 can communicate received fax data directly to destination 202 and/or can communicate the fax data to destination 208 and optionally to network-connected computing device 204 via network 206. A network-connected destination (e.g., computing device 204 and destination 208) can be identified with an Internet protocol (IP) address, or with another network label that identifies a particular device or destination to the network 206.

Additionally, computing device 204 can include indexed instructions (e.g., indexed instructions 126 shown in Fig. 1) such that receiving device 104 can communicate both the received fax data and received instruction sub-code(s) to computing device 204. The computing device 204 can then obtain an indexed instruction corresponding to the received instruction sub-code(s) 124 and redirect the fax data to a designated destination, such as destination 208, and/or process the fax data according to a fax data processing instruction.

Network 206 can be implemented as any type of network, such as a local area network (LAN), using any type of network topology and any network communication protocol. Although only a few devices are shown communicatively linked via network 206, a typical network can have any number of devices connected to it, either directly or indirectly via another network system. The internet is an example of multiple connected network systems each having multiple devices.

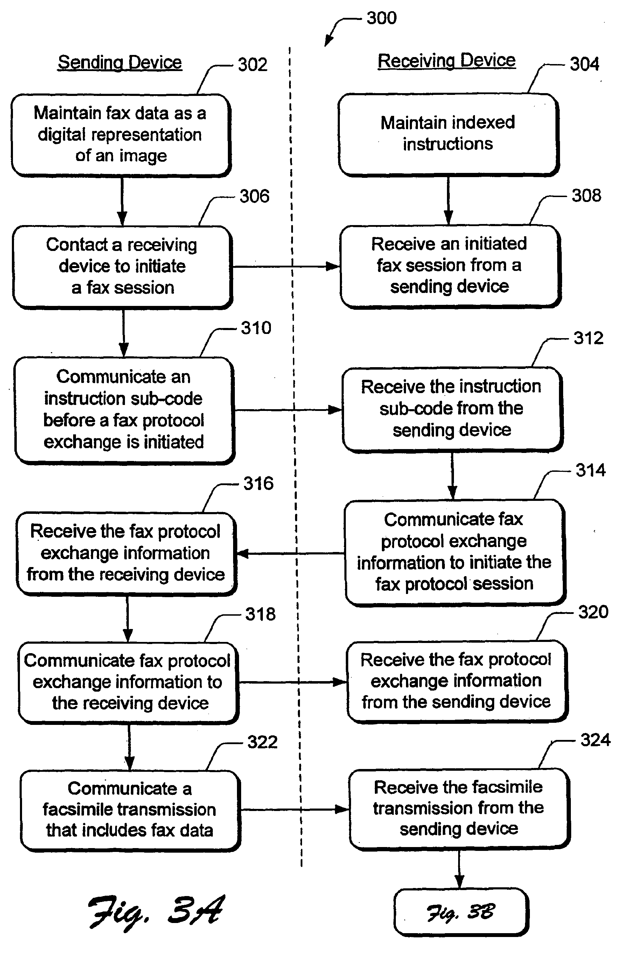

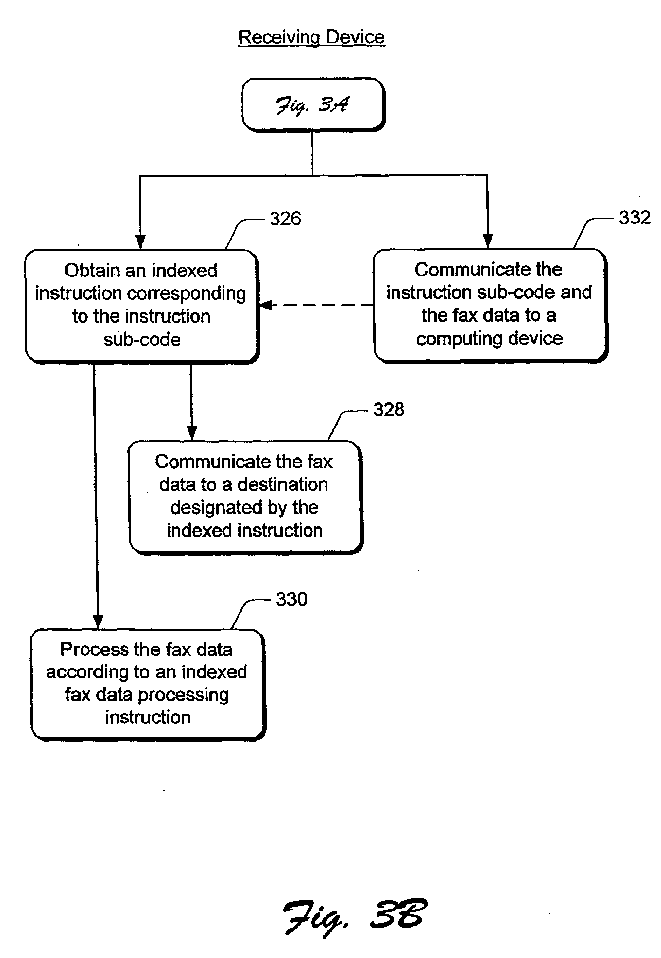

Figs. 3A and 3B illustrate an exemplary method 300 for facsimile transmission with instruction sub-code. The order in which the method is described is not intended to be construed as a limitation, and any number of the described method blocks can be combined in any order to implement the method. Further, the method 300 may be described in the general context of computer-executable instructions which can include routines, programs, objects, components, data structures, and the like that perform particular functions or implement particular abstract data types. The described method may also be practiced in distributed computing environments where functions are performed by remote processing devices that are linked through a communications network. In a distributed computing environment, computer-executable instructions may be located in both local and remote computer storage media, including memory storage devices.

At block 302 (Fig. 3A), fax data is maintained as a digital representation of an image. For example, sending device 102 maintains fax data 110 that represents a scanned image. At block 304, indexed instructions are maintained. For example, receiving device 104 maintains indexed instructions 126 that are fax data processing instructions and/or that designate a destination of fax data 110 that is received from sending device 102. An indexed instruction 126 is maintained by receiving device 104 and corresponds to an instruction sub-code maintained by sending device 102.

At block 306, a fax session is initiated. For example, sending device 102 communicates a dialed fax number of dual tone multi-frequency tones to receiving device 104 to initiate a fax session. At block 308, an initiated fax session is received from a sending device. For example, receiving device 104 receives the dual tone multi-frequency tones corresponding to the fax number of the receiving device from sending device 102.

At block 310, an instruction sub-code is communicated to the receiving device before the receiving device initiates a fax protocol exchange. For example, sending device 102 communicates one or more additional dual tone multi-frequency tones as an instruction sub-code 124 to receiving device 104 during the pause duration after the receiving device answers the fax-telephone number call from the sending device. The instruction sub-code can be communicated to designate a destination of the fax data, to designate a fax data processing instruction, or as an instruction sub-code that corresponds to an indexed instruction maintained by the receiving device 104.

At block 312, an instruction sub-code is received from the sending device. For example, receiving device 104 receives an instruction sub-code 124 from sending device 102 before the receiving device 104 initiates a fax protocol exchange with the sending device 102.

At block 314, fax protocol exchange information is communicated to the sending device to initiate the fax protocol exchange, and at block 316, the fax protocol exchange information is received. For example, receiving device 104 initiates the fax protocol exchange by communicating local fax protocol exchange information 128 (e.g., local to the receiving device) to sending device 102. The sending device 102 receives the remote fax protocol exchange information 128 (e.g., remote to the sending device) from receiving device 104.

At block 318, fax protocol exchange information is communicated to the receiving device, and at block 320, the fax protocol exchange information is received. For example, sending device 102 communicates local fax protocol exchange information 130 (e.g., local to the sending device) to receiving device 104 which receives the remote fax protocol exchange information 130 (e.g., remote to the receiving device).

At block 322, a facsimile transmission that includes fax data is communicated to the receiving device, and at block 324, the facsimile transmission that includes the fax data is received from the sending device. For example, sending device 102 communicates fax data 110 which is received by receiving device 104.

At block 326 (Fig. 3B), an indexed instruction corresponding to the instruction sub-code is obtained. For example, receiving device 104 obtains an indexed instruction 126 corresponding to an instruction sub-code 124 received from sending device 102. The indexed instruction 126 can designate a destination of the received fax data, and/or the indexed instruction can be a fax data processing instruction.

At block 328, the fax data is communicated to a destination designated by the indexed instruction. For example, receiving device 104 communicates the received fax data directly to a destination 202 (Fig. 2), or communicates the received fax data to a destination device 204 and/or a destination 208 via a network 206. Alternatively or in addition, at block 330, the fax data is processed according to an indexed fax data processing instruction.

At block 332, the instruction sub-code and the fax data are communicated to a computing device. For example, receiving device 104 communicates a received instruction sub-code and the fax data to computing device 204 (Fig. 2). The computing device can then obtain an indexed instruction corresponding to the instruction sub-code (e.g., block 326), communicate the fax data to a destination designated by the indexed instruction (e.g., block 328), and/or process the fax data according to an indexed fax data processing instruction (e.g., block 330).

Fig. 4 illustrates an exemplary all-in-one device 400 that is a facsimile enabled device which can be implemented in a facsimile transmission system, such as system 100 (Fig. 1) and facsimile network system 200 (Fig. 2). The all-in-one device 400 can be implemented as any one of the devices described herein, such as sending device 102, receiving device 104, and as a destination 202 or 208. An all-in-one device is a multi-function device that can be implemented for multiple functions which are related, but not limited to, printing, copying, scanning, to include image acquisition and text recognition, sending and receiving faxes, print media handling, and/or data communication, either by print media or e-media, such as via email or electronic fax, or to and from a connected network of computing and electronic devices.

All-in-one device 400 includes one or more processors 402 (e.g., any of microprocessors, controllers, and the like) which process various instructions to control the operation of all-in-one device 400 and to communicate with other electronic and computing devices.

All-in-one device 400 can be implemented with one or more memory components, examples of which include random access memory (RAM) 404, a disk drive 406, and non-volatile memory 408 (e.g., any one or more of a ROM 410, flash memory, EPROM, EEPROM, etc.). The one or more memory components store various information and/or data such as configuration information, print job information and data, graphical user interface information, fonts, templates, menu structure information, and any other types of information and data related to operational aspects of all-in-one device 400. For example, disk drive 406 and/or non-volatile memory 408 can be implemented to store and maintain the directory store 114 (Fig. 1) information, such as the fax number(s) 122, the instruction sub-code(s) 124, and other facsimile routing information, including network URL (Universal Resource Locator) addresses, as well as scanned fax data 110, fax protocol exchange information 128 (or 130), and the indexed instruction(s) 126.

All-in-one device 400 includes a firmware component 412 that is implemented as a permanent memory module stored on ROM 410, or with other components in device 400, such as a component of a processor 402. Firmware 412 is programmed and distributed with device 400 to coordinate operations of the hardware within the device and contains programming constructs used to perform such operations.

An operating system 414 and one or more application programs 416, such as facsimile applications 112 and 118 (Fig. 1), can be stored in non-volatile memory 408 and executed on processor(s) 402 to provide a runtime environment. A runtime environment facilitates extensibility of the all-in-one device 400 by allowing various interfaces to be defined that, in turn, allow application programs 416 to interact with device 400.

All-in-one device 400 further includes one or more communication interfaces 418 which can be implemented as any one or more of a serial and/or parallel interface, a wireless interface, any type of network interface, and as any other type of communication interface, such as a modem connected to the PSTN to send and receive facsimile transmissions. A wireless interface enables the device 400 to receive control input commands and other information from an input device, such as from an infrared (IR), 802.11, Bluetooth, or similar RF input device. A network interface provides a connection between device 400 and a data communication network which allows other electronic and computing devices coupled to a common data communication network to send print jobs, menu data, fax data, and other information to device 400 via the network. Similarly, a serial and/or parallel interface provides a data communication path directly between all-in-one device 400 and another electronic or computing device.

All-in-one device 400 also includes a print unit 420 that includes mechanisms arranged to selectively apply an imaging medium such as liquid ink, toner, and the like to a print media in accordance with print data corresponding to a print job. The print media can include any form of media used for printing such as paper, plastic, fabric, Mylar, transparencies, and the like, and different sizes and types such as 8½ x 11, A4, roll feed media, etc. The print unit 420 can be implemented to display results when receiving and/or sending a facsimile transmission.

All-in-one device 400 can also include a scan unit 422 that can be implemented as an optical scanner to produce machine-readable image data signals that are representative of a scanned image, such as a photograph or a page of printed text. The image data signals produced by scan unit 422 can be communicated from device 400 to another device and can be used to reproduce the scanned image on a display device or with a printing device. Further, the image data signals can be utilized to communicate facsimile transmission information.

All-in-one device 400 also includes a user interface and menu browser 424, and a display panel 426. The user interface and menu browser 424 allows a user of device 400 to navigate the device's menu structure. User interface 424 can be indicators or a series of buttons, switches, or other selectable controls that are manipulated by a user of the all-in-one device. Display panel 426 is a graphical display that provides information regarding the status of all-in-one device 400 and the current options available to a user through the menu structure. The user interface 424 can be used to control, answer, and initiate facsimile transmissions, and to enter telephone numbers and instruction sub-codes.

Although shown separately, some of the components of all-in-one device 400 can be implemented in an application specific integrated circuit (ASIC). Additionally, a system bus (not shown) typically connects the various components within all-in-one device 400. A system bus can be implemented as one or more of any of several types of bus structures, including a memory bus or memory controller, a peripheral bus, an accelerated graphics port, or a local bus using any of a variety of bus architectures.

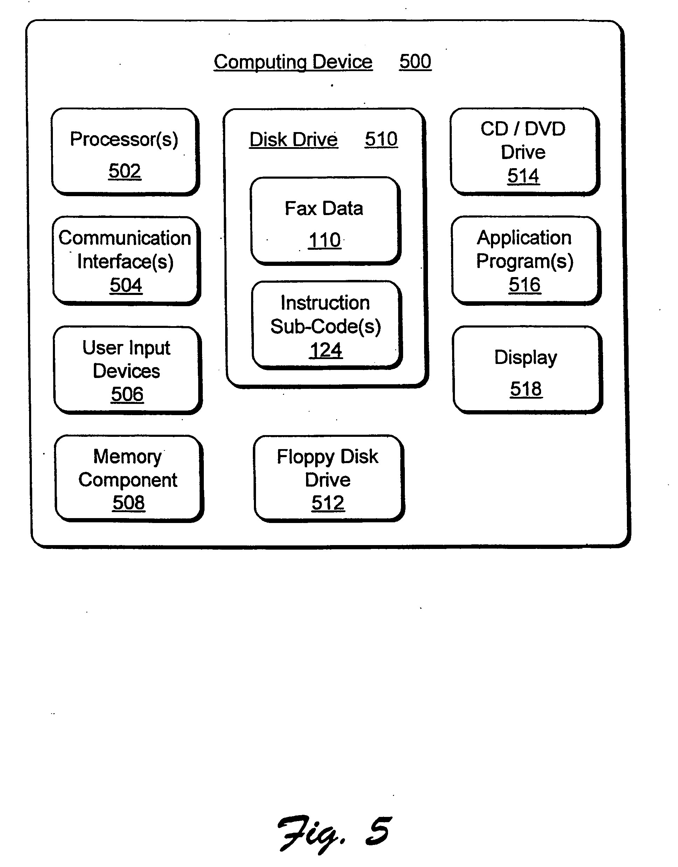

Fig. 5 illustrates various components of an exemplary computing device 500 that can be utilized with the inventive techniques described herein. For example, computing device 204 (Fig. 2) can be implemented as exemplary computing device 500. Computing device 500 includes one or more processors 502, input/output communication interfaces 504 for the input and/or output of data, and user input devices 506. Processor(s) 502 process various instructions to control the operation of computing device 500, while the communication interfaces 504 provide a mechanism for computing device 500 to communicate with other electronic and computing devices. User input devices 506 can include a keyboard, mouse, pointing device, and/or other mechanisms to interact with, and to input information to computing device 500.

Communication interfaces 504 can include serial, parallel, and/or network interfaces. A network interface allows devices coupled to a common data communication network, such as network 206 (Fig. 2), to communicate information with computing device 500. Similarly, a serial and/or parallel interface provides a data communication path directly between computing device 500 and another electronic or computing device, such as receiving device 104 (Fig. 1).

Computing device 500 also includes a memory component 508 (such as a ROM and/or a RAM), a disk drive 510, a floppy disk drive 512, and an optical disk drive 514 for reading from and/or writing to a removable, non-volatile optical disk 524 such as a CD-ROM, DVD-ROM, or other optical media. The memory components all provide data storage mechanisms for computing device 500. For example, disk drive 510 can store scanned fax data 110 and instruction sub-codes 124.

Computing device 500 also includes application program(s) 516 and can include an integrated display 518, such as for a personal digital assistant (PDA), a portable computing device, and similar mobile computing devices. Although not shown, a system bus typically connects the various components within computing device 500.

Although the invention has been described in language specific to structural features and/or methods, it is to be understood that the invention defined in the appended claims is not necessarily limited to the specific features or methods described. Rather, the specific features and methods are disclosed as exemplary implementations of the claimed invention.

## Claims

1. A method (300), comprising:
contacting (306) a receiving device (104) to initiate a fax session with the receiving device (104);
communicating (310) an instruction sub-code (124) to the receiving device (104) before the receiving device (104) initiates a fax protocol exchange;
receiving remote fax protocol exchange information (128) from the receiving device (104);
communicating local fax protocol exchange information (130) to the receiving device (104); and
communicating a facsimile transmission that includes fax data (110) to the receiving device (104).

2. A method (300) as recited in claim 1, wherein the instruction sub-code (124) is communicated as one or more dual tone multi-frequency tones that correspond to an indexed instruction (126) maintained by the receiving device (104), the indexed instruction (126) designating a destination of the fax data (110).

3. A method (300) as recited in claim 1, wherein the instruction sub-code (124) is communicated as one or more dual tone multi-frequency tones that correspond to an indexed fax data processing instruction (126) maintained by the receiving device (104).

4. A method (300), comprising:
receiving a call from a sending device (102) to initiate a fax session;
receiving an instruction sub-code (124) from the sending device (102) before initiating a fax protocol exchange with the sending device (102);
communicating local fax protocol exchange information (128) to the sending device (102);
receiving remote fax protocol exchange information (130) from the sending device (102); and
receiving a facsimile transmission that includes fax data (110) from the sending device (102).

5. A method (300) as recited in daim 4, further comprising maintaining one or more indexed instructions (126) that designate at least one of a destination of the fax data and a fax data processing instruction, the one or more indexed instructions (126) corresponding to the instruction sub-code (124).

6. A facsimile enabled device (102), comprising:
a memory component (406) configured to maintain a digital representation of an image as fax data (110); and
an application program (416) configured to:
contact a receiving device (104) to initiate a fax session with the receiving device (104);
communicate an instruction sub-code (124) to the receiving device (104) before the receiving device (104) initiates a fax protocol exchange;
communicate fax protocol exchange information (130) to the receiving device (104); and
communicate a facsimile transmission that includes the fax data (110) to the receiving device (104).

7. A facsimile enabled device (102) as recited in claim 6, wherein the instruction sub-code (124) designates a destination of the fax data (110).

8. A facsimile enabled device (102) as recited in claim 6, wherein the instruction sub-code (124) designates a fax data processing instruction (126).

9. A facsimile enabled device (102) as recited in claim 6, wherein the instruction sub-code (124) corresponds to an indexed instruction (126) maintained by the receiving device (104).

10. A facsimile enabled device (102) as recited in claim 6, wherein the application program (416) is further configured to:
initiate the fax session with a dialed fax number (122) of dual tone multi-frequency tones; and
communicate the instruction sub-code (124) as one or more additional dual tone multi-frequency tones after the dialed fax number.
